# EUROPEAN PATENT SPECIFICATION

(11) **EP 3 135 472 B1**
(45) Date of publication and mention of the grant of the patent: **22.10.2025**
(21) Application number: 16185354.4
(22) Date of filing: 23.08.2016
(51) Int. Cl.: B32B 5/02, F41H 5/04, B64C 1/40, B32B 15/18, B32B 7/12, B32B 3/26, B32B 3/08, B32B 3/06, B32B 3/04, B32B 3/02, B32B 27/20, B32B 15/08, B32B 15/02, B32B 7/08, B32B 7/04, B32B 5/26, B32B 5/24, B32B 5/22, B64C 1/06, B64C 1/22, F42D 5/045

(54) **METHODS, SYSTEMS AND APPARATUS FOR LINING AN AIRCRAFT CARGO COMPARTMENT**
VERFAHREN, SYSTEME UND VORRICHTUNG ZUM AUSKLEIDEN EINES FLUGZEUGFRACHTABTEILS
PROCÉDÉS, SYSTÈMES ET APPAREIL POUR LE REVÊTEMENT D'UNE SOUTE D'AÉRONEF

(30) Priority: 27.08.2015 US 201514837394
(43) Date of publication of application: 01.03.2017
(73) Proprietor: The Boeing Company, Arlington, VA 22202 (US)
(72) Inventor: SLATON, Daniel B., Renton, WA Washington 98059 (US); ANGLIN, Matthew Allen, Seattle, WA Washington 98103 (US)
(74) Representative: Howson, Richard Giles Bentham

(56) References cited:
- WO-A1-2009/040864
- US-A- 5 252 160
- US-A1- 2004 086 729
- US-A1- 2011 114 342
- US-A1- 2015 014 484

## Description

### FIELD OF THE DISCLOSURE

This disclosure relates generally to cargo compartments and, more particularly, to methods, systems and apparatus for lining an aircraft cargo compartment.

### BACKGROUND

Aircraft often include a cargo compartment to stow cargo (e.g., commercial cargo, passenger luggage, military equipment, etc.) during travel. In some instances, a fire may start in the cargo compartment of the aircraft. To impede the spread of fire from the cargo compartment to other portions of the aircraft (e.g., electrical controls, pilot cockpit, passenger compartment), some known aircraft line the cargo compartment with a fire-resistant liner. The liner impedes the spread of the fire to increase an amount of time that a pilot has to suppress the fire to maintain a safe flight and/or to safely land the aircraft before the fire reaches other portions of the aircraft. In some instances, the liner deteriorates and allows fire to escape the cargo compartment when exposed to fire at high temperatures and/or for a prolonged period of time.

US 5252160A states in its abstract: a hybrid metal/composite spinner cone used in aircraft applications and a method of manufacturing the same. The spinner cone has a metal outer shell which is bonded during the molding process to an inner structural member of thermoplastic composite. US 5252160A discloses that thermoplastic advanced composites have significant property advantages over thermoset systems such as an impact resistance of up to 10 times higher, improved microcrack resistance, negligible moisture absorption, superior flame and radiation resistance and excellent damping characteristics.

US 2015/014484 A1 states in its abstract: apparatus and method for joining composite structures of aircrafts. An example apparatus includes an inboard composite wing panel having a first end portion configured to be coupled to upper and lower inboard fittings composed of a metallic material and an outboard composite wing panel having a first end portion configured to be coupled to upper and lower outboard fittings composed of a metallic material. A side of body rib has a plate shaped first end portion composed of a metallic material. A fuselage frame is configured to be joined at one end of the upper inboard fitting, and the upper and lower inboard fittings and the upper and lower outboard fittings are coupled to the side of body rib at the plate shaped first end portion.

US 2004/086729 A1 states in its abstract: ballistically resistant and fire resistant composite articles for aircraft interiors and other applications. Composite articles are provided having a flexural modulus of at least about 80,000 lbs/sq in (552 MPa), a flexural strength at yield of at least about 800 lbs/sq. in. (5.52 MPa), an areal density of about 0.9 lb/ft<2 >(4.40 kg/m<2>) to about 1.5 lb/ft<2 >(5.86 kg/m<2>), a fire resistance meeting the requirements of PRG 25.853 Title 14 of the United States Code, Jan. 1, 2002, and a V0 velocity of at least about 1430 ft/sec (427 m/s) when tested by United States Federal Aviation Administration Advisory Circular 25.795.2, Jan. 10, 2002, using .44 Magnum Jacketed Hollow Point (JHP) bullets of 240 grains (15.6 g) mass and using 9 mm Full Metal Jacketed, Round Nose (FMJ RN) bullets of 124 grains (8.0 g) mass.

US 2011/114342 A1 describes a fire barrier system for use in aircraft, ship or offshore drilling platform comprises a flexible graphite sheet. Methods of providing fire barrier protection in an aircraft, ship or offshore drilling platform comprise installing the described fire barrier system in the aircraft, ship or offshore drilling platform. Additionally, the fire barrier system when installed in the aircraft, ship or offshore drilling platform is described.

WO 2009/040864 describes a panel made of flame-resistant composite material, comprising a first refractory layer composed of non-woven ceramic fiber fabric, a second layer of long-fiber fabric skins impregnated with resin, a structural adhesive layer, a layer of material with honeycomb structure filled of oxide-based materials with low thermal conductivity, a structural adhesive, another layer formed by long-fiber fabric skins impregnated with resin or by a plate.

### SUMMARY

Aspects and features of the invention to which this European patent relates are set out in the accompanying claims. In one aspect, there is an apparatus according to claim 1. Optional features are set out in the dependent claims 2 to 5. In another aspect, there is a method according to claim 6. Optional features are set out in the dependent claims 7 and 8.

### BRIEF DESCRIPTION OF THE DRAWINGS

FIG. 1 depicts an example aircraft constructed in accordance with the teachings disclosed herein.
FIG. 2 illustrates an example aircraft cargo compartment having a liner constructed in accordance with the teachings disclosed herein.
FIG. 3A is a partial, cross-sectional view of the example liner of FIG. 2 in accordance with the teachings disclosed herein.
FIG. 3B is a partial, front view of the example liner of FIGS. 2 and 3A.
FIG. 4A is a partial, cross-sectional view of another example liner for the aircraft cargo compartment of FIG. 2 in accordance with the teachings disclosed herein.
FIG. 4B is a partial, front view of the example liner of FIG. 4A.
FIG. 5 is a partial, cross-sectional view of another example liner for the aircraft cargo compartment of FIG. 2 in accordance with the teachings disclosed herein.
FIG. 6 is a partial, cross-sectional view of another example liner for the aircraft cargo compartment of FIG. 2 in accordance with the teachings disclosed herein.
FIG. 7 is a partial, cross-section view another example liner for the aircraft cargo compartment of FIG. 2 in accordance with the teachings disclosed herein.
FIG. 8 is a flowchart representative of an example method to provide flame-penetration resistance to the example aircraft cargo compartment of FIG. 2.

The examples of the figures listed above are to be considered reference examples.

The figures are not to scale. Instead, to clarify multiple layers and regions, the thicknesses of the layers may be enlarged in the drawings. Wherever possible, the same reference numbers will be used throughout the drawing(s) and accompanying written description to refer to the same or like parts. As used in this disclosure, stating that any part (e.g., a layer, film, area, or plate) is in any way positioned on (e.g., positioned on, located on, disposed on, or formed on, etc.) another part, means that the referenced part is either in contact with the other part, or that the referenced part is above the other part with one or more intermediate part(s) located there between. Stating that any part is in contact with another part means that there is no intermediate part between the two parts.

### DETAILED DESCRIPTION

Many known aircraft (e.g., passenger aircraft, freight aircraft, military aircraft, etc.) include a cargo compartment in which cargo is stowed during a flight of the aircraft. For example, some passenger aircraft include a cargo compartment below a passenger compartment to store luggage of the passengers, freight (e.g., raw materials, manufactured materials, merchandise, etc.) and/or mail during flight. In some examples, the cargo compartment of a freight aircraft (e.g., a cargo aircraft, a freighter, an airlifter, a cargo jet, etc.) consumes a substantial portion of the aircraft to enable the freight aircraft to transport a greater amount of cargo relative to a passenger aircraft.

To impede and/or slow the spread of fire from a cargo compartment, many known aircraft include a liner positioned along walls of the cargo compartment to temporarily contain the fire within the cargo compartment. To impede the spread of fire to other portions of the aircraft, some known liners are composed of fire-resistant composite material that delays fire from penetrating the walls of the cargo compartment. Thus, a pilot of the aircraft is provided with time to safely land before the fire spreads to other areas of the aircraft (e.g., the electronic controls, the cockpit, the passenger compartment). However, such known liners can deteriorate when exposed to fire for prolonged periods of time and/or at high temperatures, thereby enabling the fire to spread from the cargo compartment under such conditions. For example, when exposed to fire for an extended period of time, some known liners may disintegrate, crumble, decay and/or otherwise lose their structural rigidity. As a result, the fire is exposed to and may penetrate the wall of the cargo compartment (e.g., a wall composed of non-fire-resistant, flammable material) and spreads to other portions of the aircraft.

Government agencies (e.g., the Federal Aviation Administration, hereinafter the "FAA") have enacted regulations that require liners of cargo compartments to withstand designated temperatures for a designated period of time. For example, the FAA requires that aircraft cargo compartment liners are capable of withstanding fires at a temperature of 1100 degrees Kelvin (1600 degrees Fahrenheit) for 5 minutes. Additionally or alternatively, a liner of an aircraft cargo compartment may be exposed to temperatures exceeding 1100 degrees Kelvin (1600 degrees Fahrenheit), thereby reducing an amount of time that the liner can withstand fire before deteriorating.

Example methods, systems, and apparatus disclosed herein provide for a durable, lightweight, structurally rigid and/or a flame-penetration resistant liner of an aircraft cargo compartment to increase a temperature and/or an amount of time that the liner is capable of withstanding exposure to fire.

A reference example apparatus disclosed herein includes a fire-resistant composite layer that provides flame-penetration resistance to an aircraft cargo compartment and a metallic layer coupled to the composite layer that increases a structural rigidity of the composite layer when the composite layer is exposed to fire. The metallic layer is coupled to the composite layer to increase the structural rigidity of the composite layer and, thus, the flame-penetration resistance provided by the composite layer without adding significant weight to the aircraft. In other words, in addition to increasing the flame-penetration resistance provided to the composite layer, the metallic layer is lightweight and increases the structural rigidity of the composite layer. For example, the metallic layer is composed of a metallic strap, frame, mesh, cloth, screen, or foil that reduces an amount of metallic material included in the liner to increase the structural rigidity of the composite layer. Further, because the metallic layer increases the structural rigidity of the composite layer, an amount (e.g., a thickness) of composite material may be reduced to reduce a weight of the composite layer without compromising the flame-penetration resistance provided by the composite layer. By reducing the weight added to the cargo compartment liner of the aircraft, an amount of fuel needed to propel the aircraft does not increase significantly and/or an amount of cargo capable of being transported by the aircraft is not reduced significantly. As a result, the metallic layer of the example apparatus increases the flame-penetration resistance provided to the cargo compartment without substantially increasing costs associated with use of the aircraft.

The metallic layer of the example apparatus is composed of a material having a substantially high melting point (e.g., 1400 degrees Kelvin (2000 degrees Fahrenheit), 1600 degrees Kelvin (2500 degrees Fahrenheit), 1900 degrees Kelvin (3000 degrees Fahrenheit)) that enables the metallic layer to maintain its structural rigidity while exposed to fire for a prolonged period of time. Because the metallic layer of the example apparatus is coupled to the composite layer, the structural rigidity of the metallic layer that is maintained due to its substantially high melting point increases the structural rigidity of the composite layer. As a result, the liner of the example apparatus maintains its position relative to an outer frame of the aircraft cargo compartment for a prolonged period of time and, thus, provides flame-penetration resistance to the aircraft cargo compartment for a prolonged period of time. In some examples, the metallic layer is composed of a metal material having a melting point (e.g., greater than or equal to about 1400 degrees Kelvin (2000 degrees Fahrenheit)) that enables the example apparatus to withstand a fire having a temperature substantially greater than 1100 degrees Kelvin (1600 degrees Fahrenheit) and/or for substantially longer than 5 minutes (e.g., 7 minutes, 10 minutes, 20 minutes, 30 minutes, etc.).

In some examples, the metallic layer is composed of a material that enables the example apparatus to withstand a fire having a temperature of about 1500 degrees Kelvin (2300 degrees Fahrenheit). For example, the metallic layer may be composed of steel (e.g., having a melting point of about 1600 degrees Kelvin (2500 degrees Fahrenheit)) or titanium (e.g., having a melting point of about 1900 degrees Kelvin (3000 degrees Fahrenheit)).

The metallic layer of the claimed apparatus includes straps that form a grid-like structure. In some examples, the metallic layer includes plates or washers adjacent respective fasteners that attach the liner to an aircraft support adjacent an outer boundary of the cargo compartment. The grid-like structure, plates and/or washers formed by the metallic straps provides structural rigidity to the composite layer while reducing an amount and, thus, weight of the metallic material that is included in the liner. Thus, the metallic layer of the example apparatus increases flame-penetration resistance provided to the cargo compartment without significantly increasing the weight of the liner that negatively affects performance of the aircraft.

In a reference example, the metallic layer may include a solid foil layer that, in addition to increasing the structural rigidity of the composite layer, increases the flame-penetration resistance provided to the cargo compartment. For example, the foil layer is a thin layer of metallic material that provides structural rigidity to the composite layer without adding a substantial amount of weight to the liner. In some examples, the thin foil layer of metallic material has a thickness of about between 0.013mm (0.0005 inches) and 0.076mm (0.003 inches). Because the foil layer is coupled to the composite layer, the foil layer maintains the position of the composite layer and, thus, increases the flame-penetration resistance provided by the composite layer. Moreover, because the foil layer is composed of a solid layer of metallic material having a substantially high melting point, the foil layer forms a flame-barrier system that further increases the flame-penetration resistance provided to the cargo compartment.

In some reference examples, the metallic layer includes a metallic mesh, a metallic cloth, or a metallic screen that increases the structural rigidity of the composite layer and also increases the flame-penetration resistance provided to the cargo compartment. The metallic mesh, cloth, or screen of such examples may define openings (e.g., openings having a length and/or width of up to about 6.4mm (0.25 inches)) extending through the metallic layer to reduce an amount of weight added to the liner without compromising the increase structural rigidity provided to the composite layer. By maintaining the position of the composite layer, the metallic mesh, cloth, or screen increases the flame-penetration resistance provided by the composite layer. Moreover, in some examples, the metallic mesh, cloth, or screen forms a flame-barrier system that further increases the flame-penetration resistance provided to the cargo compartment. For example, the metallic mesh, cloth, or screen includes openings of about 1.3mm (0.05 inches) and below to reduce an amount of weight added to the liner without substantially reducing the flame-penetration resistance provided by the metallic mesh, cloth, or screen.

In some examples, the apparatus includes a second metallic layer to further increase the structural rigidity of the composite layer. For example, the apparatus may include layers composed of any combination of metallic straps, metallic plates, metallic washers, metallic foil, metallic mesh, metallic cloth and/or metallic screens to increase the structural rigidity of the composite layer and/or to increase the flame-penetration resistance provided to the cargo compartment.

The example apparatus may act as a flame-arrestor system having a plurality of openings and a composite laminate that forms a vehicle cargo-liner system to restrict flame penetration. For example, the flame-arrestor system prevents a flame or fire from escaping a compartment (e.g., a cargo compartment) along which it is lined such that the flame or fire is at least temporarily contained or arrested within the compartment. The vehicle cargo-liner system maintains its position relative to an outer boundary of a cargo compartment during and/or after exposure to a fire event to increase an amount of time that a pilot has to suppress the fire and/or safely land the aircraft.

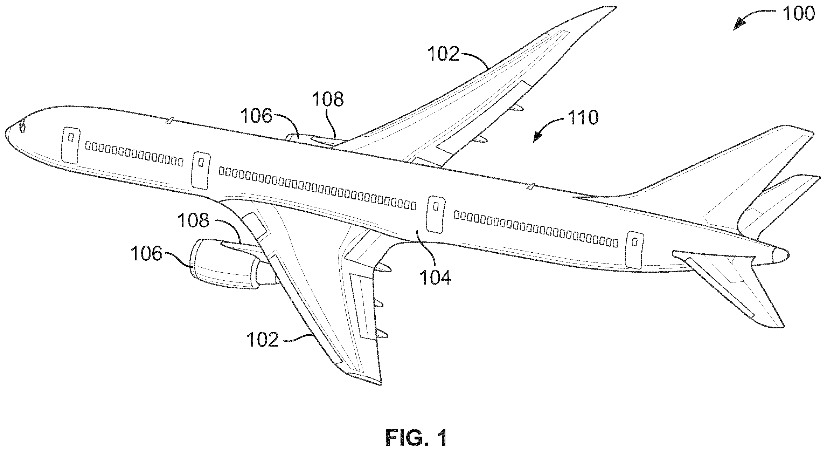

Turning to the figures, FIG. 1 illustrates an example aircraft 100 including wings 102 (e.g., a right wing and a left wing) extending laterally outward from a fuselage 104. Each of the wings 102 of the illustrated example supports an aircraft engine 106 via a pylon 108. A cargo compartment 110 is disposed within the fuselage 104 of the illustrated example.

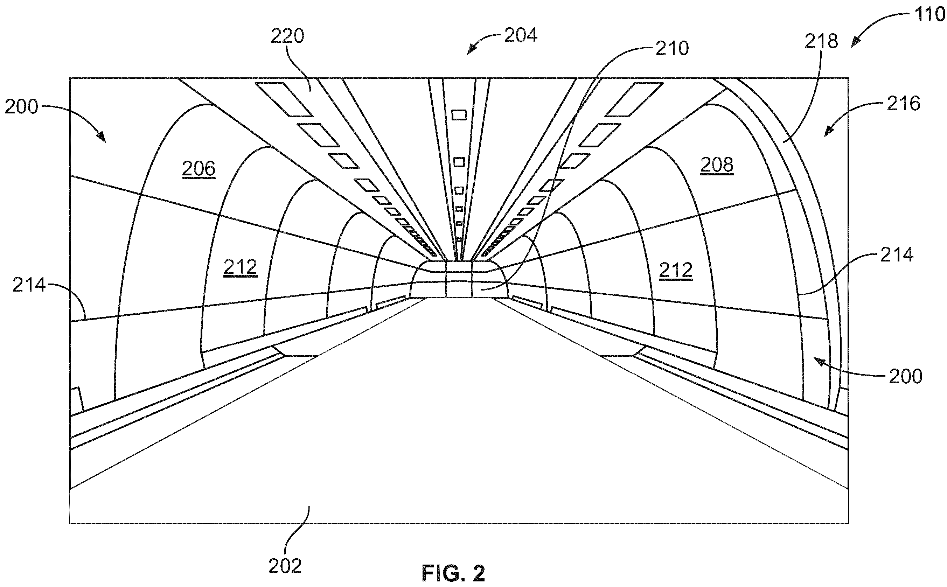

FIG. 2 illustrates the example cargo compartment 110 having an example liner 200 in accordance with the teachings herein. As illustrated in FIG. 2, the cargo compartment 110 is defined by a floor 202, a ceiling 204, side walls 206, 208 extending between the floor 202 and the ceiling 204, and an end wall 210 adjacent the side walls 206, 208 and extending between the floor 202 and the ceiling 204. In the illustrated example, a door is opposite the end wall 210 to enable cargo to be inserted into and/or removed from the cargo compartment 110. In other examples, a door is positioned along another wall (e.g., the side wall 206, the side wall 208, the end wall 210) of the cargo compartment 110.

The liner 200 of the illustrated example includes a composite layer 212 and metallic layer (or reinforcing grid) 214. As illustrated in FIG. 2, the metallic layer (or reinforcing grid) 214 (e.g., a metallic frame) and the composite layer 212 of the liner 200 are adjacent an outer boundary 216 of the cargo compartment 110. In examples in which the aircraft 100 is a freight aircraft, the outer boundary 216 of the cargo compartment 110 is adjacent a surface of the fuselage 104 (FIG. 1). In examples in which the aircraft 100 is a passenger aircraft, the outer boundary 216 of the cargo compartment 110 is adjacent a passenger compartment and the surface of the fuselage 104. To be positioned adjacent the boundary 216, the composite layer 212 and the metallic layer (or reinforcing grid) 214 are coupled to aircraft supports 218 that extend from the floor 202 of the cargo compartment 110. In the illustrated example, the liner 200 extends along the side walls 206, 208, the end wall 210, and the ceiling 204. A lighting system 220 covers the liner 200 along the ceiling 204 to provide light to the cargo compartment 110.

The cargo compartment 110 of the illustrated example is to stow cargo during flights of the aircraft 100 (FIG. 1). In some examples in which the aircraft 100 is a passenger aircraft, the cargo compartment 110 is located below a passenger compartment and stows luggage of passengers, freight (e.g., raw materials, manufactured materials, merchandise, etc.), mail and/or other cargo. In some examples in which the aircraft 100 is a freight aircraft (e.g., a cargo aircraft, a freighter, an airlifter, a cargo jet, etc.) and/or a military aircraft, the cargo compartment 110 consumes a substantial portion of the fuselage 104 (FIG. 1) of the aircraft 100 to enable the cargo compartment 110 to stow a large amount of freight, military equipment and/or other cargo.

The liner 200 of the illustrated example is positioned along the boundary 216 of the cargo compartment 110 to prevent, impede and/or slow the spread of fires from the cargo compartment 110 to other portions of the aircraft 100. For example, to contain the fire within the cargo compartment 110, the composite layer 212 of the liner 200 is composed of a fire-resistant composite material such as a phenolic resin reinforced with woven fiberglass (e.g., S-glass, E-glass, etc.). The fire-resistant material of the composite layer 212 prevents the fire from contacting, igniting and/or otherwise spreading to other areas, portions and/or compartments of the aircraft. In other words, the composite layer 212 of the liner 200 forms a barrier at the boundary 216 of the cargo compartment 110 to provide fire-penetration resistance to the cargo compartment 110 to impede the spread of fire to other portions of the aircraft 100.

In some examples, a thickness of the composite layer 212 varies depending on an aircraft type (e.g., a passenger aircraft, a freight aircraft, a military aircraft, etc.), an intended type of cargo (e.g., passenger luggage, mail, hazardous materials, military equipment, etc.), a material of the composite layer 200 (e.g., a fire-resistant composite material such as a phenolic resin reinforced with woven fiberglass (e.g., S-glass, E-glass, etc.)), and/or a location of the composite layer 200 within the cargo compartment 110. For example, a portion of the composite layer 212 adjacent electrical components of a control system has a substantially greater thickness relative to other portions of the composite layer 212 to prevent the fire from reaching the control system.

In some examples, exposure to fire for a period of time and/or at high temperatures may cause the composite layer 212 of the liner 200 to deteriorate and, thus, decrease a structural rigidity of the composite layer 212. The metallic layer (or reinforcing grid) 214 of the illustrated example is coupled to the composite layer 212 to increase the structural rigidity of the composite layer 212 when the composite layer 212 is exposed to fire. In some examples, because the metallic layer (or reinforcing grid) 214 increases the structural rigidity of the composite layer 212, a thickness of the composite layer 212 is reduced in the example liner 200 without compromising the flame-penetration resistance provided by the composite layer 212.

The metallic layer (or reinforcing grid) 214 is composed of material having a substantially high melting point (e.g., greater than or equal to about 1400 degrees Kelvin (2000 degrees Fahrenheit)) that enables the metallic layer (or reinforcing grid) 214 to maintain its structural rigidity when exposed to fire for prolonged periods of time (e.g., substantially greater than 5 minutes such as 7 minutes, 10 minutes, 20 minutes, 30 minutes, etc.) and/or at substantially high temperatures (e.g., substantially greater than 1100 degrees Kelvin (1600 degrees Fahrenheit)). In some examples, the melting point of the material of the metallic layer (or reinforcing grid) 214 enables the metallic layer (or reinforcing grid) 214 to maintain its structural rigidity in environments having a temperature of about 1500 degrees Kelvin (2300 degrees Fahrenheit). In some examples, the metallic layer (or reinforcing grid) 214 is composed of steel having a melting point of about 1600 degrees Kelvin (2500 degrees Fahrenheit) that enables the metallic layer (or reinforcing grid) 214 to maintain its structural rigidity at substantially high temperatures. In some examples, the metallic layer (or reinforcing grid) 214 is composed of titanium having a melting point of about 1900 degrees Kelvin (3000 degrees Fahrenheit) that enables the metallic layer (or reinforcing grid) 214 to maintain its structural rigidity at substantially high temperatures. In other words, the metallic layer (or reinforcing grid) 214 retains its structural rigidity in environments in which other materials (e.g., the material of the composite layer 212) deteriorate and/or lose structural rigidity.

Because the metallic layer (or reinforcing grid) 214 of the illustrated example is coupled to the liner 200, the metallic grid 214 increases the structural rigidity of the composite layer 212 by providing structural support to the composite layer 212. Thus, the metallic layer (or reinforcing grid) 214 maintains the position of the composite layer 212 at the boundary 216 of the cargo compartment 110 when the composite layer 212 would otherwise fall apart, crumble and/or decay upon being exposed to fire. In turn, the composite layer 212 remains attached to the aircraft support 218 and continues to provide flame-penetration resistance at the boundary 216 of the cargo compartment 110 when exposed to fire for a prolonged periods of time and/or at substantially high temperatures (e.g., substantially greater than 1100 degrees Kelvin (1600 degrees Fahrenheit)). For example, relative to requirements of government agency regulations (e.g., FAA regulations requiring cargo liners to withstand a fire of 1100 degrees Kelvin (1600 degrees Fahrenheit) for 5 minutes), the metallic layer (or reinforcing grid) 214 and the composite layer 212 substantially increase a period of time and/or a temperature at which the liner 200 provides fire-penetration resistance to the boundary 216 of the cargo compartment 110. As a result, the metallic layer (or reinforcing grid) 214 and the composite layer 212 of the example liner 200 substantially increases an amount of time that a pilot has to safely land the aircraft before a fire spreads from the cargo compartment 110 to other areas of the aircraft.

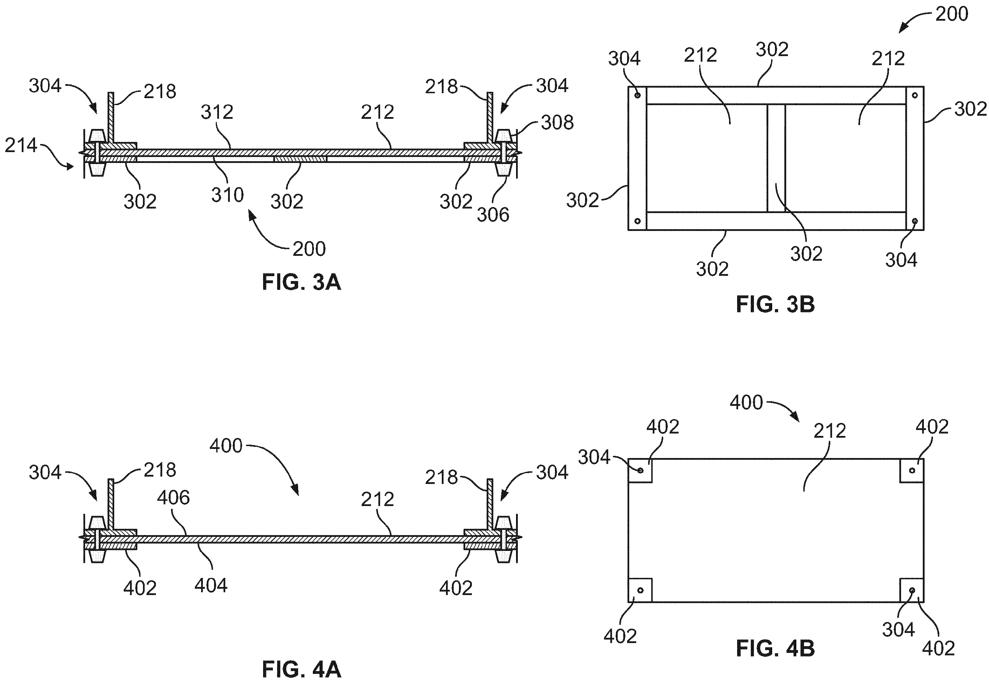

FIGS. 3A-3B illustrate the example liner 200 that is to provide flame-penetration resistance to the cargo compartment 110 of FIG. 2. In particular, FIG. 3A is a partial cross-sectional view of the example liner 200, and FIG. 3B is a partial front view of the example liner 200.

The metallic layer (or reinforcing grid) 214 of FIGS. 3A and 3B include straps 302 composed of metallic material (e.g., steel, titanium). The straps 302 of the metallic layer (or reinforcing grid) 214 are coupled to the composite layer 212 via, for example, co-curing or bonding. In the illustrated example, the metallic layer (or reinforcing grid) 214 and the composite layer 212 of the liner 200 are attached to the aircraft supports 218 via fasteners 304 and/or other fastening mechanisms. To couple the composite and metallic layers (or reinforcing grid) 212, 214 to the aircraft supports 218, the fasteners 304 of the illustrated example include bolts 306 that extend through the metallic layer (or reinforcing grid) 214, the composite layer 212, and the aircraft support 218 and are received (e.g., fixedly received, threadably received) by a respective nuts 308. For example, the fastening mechanisms (e.g., the fasteners 304) are composed of material(s) that withstand temperatures substantially greater than 1100 degrees Kelvin (1600 degrees Fahrenheit). In some examples, the fasteners 304 are composed of steel having a melting point of about 1600 degrees Kelvin (2500 degrees Fahrenheit) and/or titanium having a melting point of about 1900 degrees Kelvin (3000 degrees Fahrenheit) to enable the fasteners 304 to withstand substantially high temperatures. The portion of the liner 200 illustrated in FIG. 3B includes four of the fasteners 304. In other examples, more of the fasteners 304 (e.g., two of the fasteners 304) or less of the fasteners 304 (eight of the fasteners 304) may attach the portion of the liner 200 illustrated in FIG. 3B to the aircraft supports 218.

As illustrated in FIG. 3B, the straps 302 form a grid-like pattern that increases the structural rigidity of the adjacent composite layer 212 without adding significant weight to the liner 200. Thus, in addition to increasing the flame-penetration resistance provided to the composite layer 212, the straps 302 of the metallic layer (or reinforcing grid) 214 are lightweight and increase the structural rigidity of the composite layer 212. In particular, FIG. 3B illustrates a portion of the metallic layer (or reinforcing grid) 214 in which two of the straps 302 orthogonally intersect three other of the straps 302. In other examples, the straps 302 of the metallic layer (or reinforcing grid)214 may form other patterns (e.g., parallel columns, parallel rows, triangles, etc.) that increase the structural rigidity of the adjacent composite layer 212 without adding significant weight to the liner 200.

The metallic layer (or reinforcing grid) 214 of the illustrated example is positioned along an inner surface 310 of the liner 200 such that the metallic layer (or reinforcing grid) 214 is exposed to the cargo compartment 110 (FIG. 2) and the liner 200 is disposed between the metallic layer (or reinforcing grid) 214 and the outer boundary 216 (FIG. 2) of the cargo compartment 110. In other examples, the metallic layer (or reinforcing grid) 214 may be positioned along an outer surface 312 of the liner 200 such that the metallic layer (or reinforcing grid) 214 is adjacent the boundary 216 and the liner 200 is positioned between the cargo compartment 110 and the metallic layer (or reinforcing grid)214. While the liner 200 of the illustrated example includes a single composite layer (e.g., the composite layer 212), other examples may include a plurality of composite layers to increase the flame-penetration resistance provided to the cargo compartment 110. In some such examples, the metallic layer (or reinforcing grid) 214 may be disposed between two composite layers such that the metallic layer (or reinforcing grid) 214 is unexposed. In some examples, other layers of material (e.g., a honeycomb layer, a honeycomb sandwich layer, a foam layer) may be included in the liner 200 that increase the structural rigidity of the liner 200.

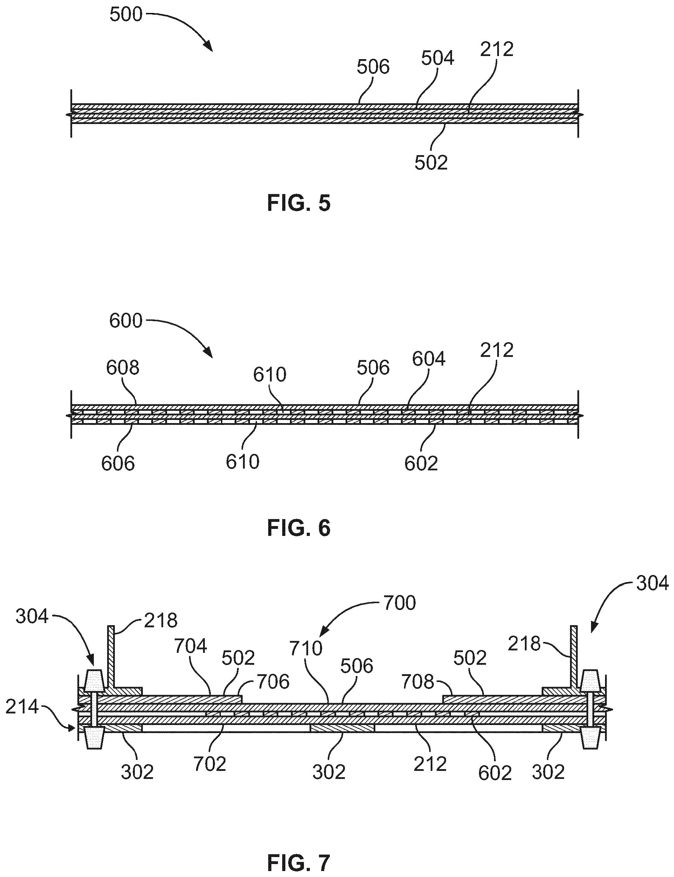

FIGS. 4A-7 illustrate other example liners having a metallic layer that provide flame-penetration resistance to the cargo compartment 110 of FIG. 2. In particular, FIGS. 4A-4B depict an example liner 400 that includes metallic washers or plates 402, FIG. 5 depicts an example liner 500 that includes metallic layers 502, 504, FIG. 6 depicts an example liner 600 that includes metallic layers 602, 604, and FIG. 7, depicts an example liner 700 that includes the metallic layer (or reinforcing grid) 214, the metallic layer 502, and the metallic layer 602.

The metallic layers of the example liners 400, 500, 600, 700 (e.g., the metallic layers 502, 504, 602, 604 and the metallic layer (or reinforcing grid) 214) are composed of material having a substantially high melting point (e.g., greater than or equal to about 1400 degrees Kelvin (2000 degrees Fahrenheit)) that enables the metallic layers to maintain their structural rigidity when exposed to fire for prolonged periods of time (e.g., 7 minutes, 10 minutes, 20 minutes, 30 minutes, etc.) and/or at substantially high temperatures (e.g., substantially greater than 1100 degrees Kelvin (1600 degrees Fahrenheit)). In some examples, the material of the metallic layers has a melting point that preserves the structural rigidity of the metallic layers in environments having a temperature of about 1500 degrees Kelvin (2300 degrees Fahrenheit). In some examples, the metallic layers are composed of steel having a melting point of about 1600 degrees Kelvin (2500 degrees Fahrenheit) that enables the metallic layers to maintain their structural rigidity at substantially temperatures. In some examples, the metallic layers are composed of titanium having a melting point of about 1900 degrees Kelvin (3000 degrees Fahrenheit) that enables the metallic layers to maintain their structural rigidity at substantially high temperatures. In other words, the metallic layers retain their structural rigidity in environments in which other materials (e.g., the material of the composite layer 212 of FIGS. 4A-7) deteriorate and/or lose their structural rigidity.

In the example liners 400, 500, 600, 700 of FIGS. 4A-7, the metallic layers provide support to a composite layer (e.g., the composite layer 212 of FIGS. 4A-7) to maintain the position of the composite layer relative to an outer boundary (e.g., the outer boundary 216 of FIG. 2) of a cargo compartment (e.g., the cargo compartment 110 of FIG. 2) when the composite layer is exposed to fire. In turn, the composite layer remains attached to aircraft supports (e.g., the aircraft supports 218) and continues to provide flame-penetration resistance to the cargo compartment 110 when exposed to fire for a prolonged periods of time and/or at substantially high temperatures. For example, the metallic layers and the composite layers of the example liners 400, 500, 600, 700 substantially increase a period of time and/or a temperature at which the cargo compartment is provided fire-penetration resistance.

FIGS. 4A-4B illustrate the example liner 400 that is to provide flame-penetration resistance to the cargo compartment 110 of FIG. 2. In particular, FIG. 4A is a partial, cross-sectional view of the example liner 400, and FIG. 4B is a partial front view of the example liner 400. As illustrated in FIGS. 4A and 4B, the metallic washers or plates 402 are positioned adjacent respective ones of the fasteners 304 to increase the structural rigidity of the composite layer 212 without adding significant weight to the liner 400. The plates 402 are coupled to the composite layer 212 via, for example, co-curing or bonding. In the illustrated example, the fasteners 304 attach the metallic plates 402 and the composite layer 212 to the aircraft supports 218.

As illustrated in FIG. 4A, the metallic plates 402 are positioned along an inner surface 404 of the liner 400 such that the metallic plates 402 are exposed to the cargo compartment 110 (FIG. 2) and the liner 400 is disposed between the metallic plates 402 and the outer boundary 216 (FIG. 2) of the cargo compartment 110. In other examples, the metallic plates 402 may be positioned along an outer surface 406 of the liner 400 such that the metallic plates 402 are adjacent the boundary 216 and the liner 400 is positioned between the cargo compartment 110 and the metallic plates 402. While the liner 400 of the illustrated example includes a single composite layer (e.g., the composite layer 212), other examples may include a plurality of composite layers to increase the flame-penetration resistance provided to the cargo compartment 110. In some such examples, the metallic plates 402 of the metallic layer (or reinforcing grid) 214 may be disposed between two composite layers such that the plates 402 are unexposed. In some examples, other layers of material (e.g., a honeycomb layer, a honeycomb sandwich layer, a foam layer) may be included in the liner 400 that increase the structural rigidity of the liner 400.

As illustrated in FIG. 5, the example liner 500, to which this European patent is not directed, includes alternating metallic layers 502, 504 and composite layers 212, 506. The metallic layers 502, 504 of the illustrated example are a solid sheet or foil of metallic material (e.g., a metallic layer without openings, apertures and/or cavities). In the illustrated example, the metallic layers 502, 504 are composed of thin layers that do not add a significant amount of weight to the liner 500. The metallic layer 502, the metallic layer 504, the composite layer 212 and/or the composite layer 506 are coupled together via, for example, co-curing or bonding to form the liner 500.

In the illustrated example, the metallic layer 502 defines an inner surface 508 of the liner 500 that is exposed to the cargo compartment 110 (FIG. 2), and the composite layer 506 defines an outer surface 510 that is adjacent the outer boundary 216 (FIG. 2) of the cargo compartment 110. In some examples, the liner 500 is positioned adjacent the boundary 216 (FIG. 2) of the cargo compartment 110 (FIG. 2) by coupling the metallic layers 502, 504 and the composite layers 212, 506 of the liner 500 to aircraft supports (e.g., the aircraft supports 218 of FIG. 3A) via fasteners (e.g., the fasteners 304 of FIG. 3A). When exposed to fire for a prolonged periods of time and/or at substantially high temperatures, the metallic layers 502, 504 provide support to the composite layers 212, 506 to maintain the position of the liner 500 relative to the aircraft supports (e.g., the aircraft supports 218 of FIG. 2). As a result, the liner 500 remains attached to the aircraft supports 218 and continues to provide flame-penetration resistance to the cargo compartment 110.

While the example liner 500 is described with reference to FIG. 5, the order of the layers (e.g., the composite layers 212, 506 and the metallic layers 502, 504) of the liner 500 may be changed and/or some of the layers described may be changed and/or eliminated. In some examples, the liner 500 is rearranged such that one of the composite layers 212, 506 defines the inner surface 508 and/or one of the metallic layers 502, 504 defines the outer surface 510 of the liner 500. In some examples, the metallic layer 502, the composite layer 212, the metallic layer 504 and/or the composite layer 506 is removed from the liner 500. In some examples, additional layers of metallic foil, composite material and/or other material (e.g., a honeycomb layer, a honeycomb sandwich layer, a foam layer) are included in the liner 500 that further increase the structural rigidity of the liner 500 and/or the flame-penetration resistance provided to the cargo compartment 110.

The example liner 600 of FIG. 6 includes alternating metallic layers 602, 604 and composite layers 212, 506. The metallic layer 602, the metallic layer 604, the composite layer 212 and/or the composite layer 506 are coupled together via, for example, co-curing or bonding to form the liner 600.

In the illustrated example, the metallic layer 602 defines an inner surface 606 of the liner 600 that is exposed to the cargo compartment 110 (FIG. 2), and the composite layer 506 defines an outer surface 608 that is adjacent the outer boundary 216 (FIG. 2) of the cargo compartment 110. In some examples, the liner 600 is positioned adjacent the boundary 216 (FIG. 2) of the cargo compartment 110 (FIG. 2) by coupling the metallic layers 602, 604 and the composite layers 212, 506 of the liner 600 to aircraft supports (e.g., the aircraft supports 218 of FIG. 3A) via fasteners (e.g., the fasteners 304 of FIG. 3A).

As illustrated in FIG. 6, each of the metallic layers 602, 604 defines apertures or openings 610 that extend through the respective metallic layer 602, 604. In some examples, each of the metallic layers 602, 604 is a metallic mesh, a metallic cloth, or a metallic screen that defines the openings 610. For example, the openings 610 formed by the mesh, cloth, or screen of the metallic layers 602, 604 have a length and/or width of up to about 6.4mm (0.25 inches). The openings 610 reduce a weight of the metallic layers 602, 604 of the example liner 600 and, thus, reduce a weight carried by the aircraft 100 (FIG. 1) during flight. When exposed to fire for a prolonged periods of time and/or at substantially high temperatures, the metallic layers 602, 604 provide support to the composite layers 212, 506 to maintain the position of the liner 600 relative to the aircraft supports (e.g., the aircraft supports 218 of FIG. 2). As a result, the liner 500 remains attached to the aircraft supports 218 and continues to provide flame-penetration resistance to the cargo compartment 110.

While the example liner 600 is described with reference to FIG. 6, the order of the layers (e.g., the composite layers 212, 506 and the metallic layers 602, 604) of the liner 600 may be changed and/or some of the layers described may be changed and/or eliminated. In some examples, the liner 600 is rearranged such that one of the composite layers 212, 506 defines the inner surface 606 and/or one of the metallic layers 602, 604 defines the outer surface 608 of the liner 600. In some examples, the metallic layer 602, the composite layer 212, the metallic layer 604 and/or the composite layer 506 is removed from the liner 600. In some examples, additional layers of a metallic mesh, a metallic cloth, a metallic screen, composite material and/or other material (e.g., a honeycomb layer, a honeycomb sandwich layer, a foam layer) are included in the liner 600 that further increase the structural rigidity of the liner 600 and/or the flame-penetration resistance provided to the cargo compartment 110.

Turning to FIG. 7, the example liner 700 increases the flame-penetration resistance provided to the cargo compartment 110 of FIG. 2. As illustrated in FIG. 7, the liner 700 includes the composite layers 212, 506, the metallic layer 602, and the metallic layer 502. In the illustrated example, the composite layer 212 defines an inner surface 702 of the liner 700 that is exposed to the cargo compartment 110, and the metallic layer 502 defines an outer surface 704 that is adjacent the boundary 216 of the cargo compartment 110. The straps 302 of the metallic layer (or reinforcing grid) 214 are coupled to the inner surface 702 of the liner 700.

As illustrated in FIG. 7, the metallic layer 602 is disposed between the composite layer 212 and the composite layer 506. A first portion 706 and a second portion 708 of the metallic layer 502 partially overlap the metallic layer 602 such that a portion 710 of the metallic layer 602 is not covered by the metallic layer 502. The metallic layer 602 is offset from the metallic layer 502 to reduce a weight of the liner 700 and, thus, reduce a weight carried by the aircraft 100 (FIG. 1) during flight.

In some examples, the metallic layer (or reinforcing grid) 214, the composite layer 212, the metallic layer 602, the composite layer 506 and/or the metallic layer 502 are coupled together via co-curing or bonding to form the liner 700. To position the liner 700 adjacent the outer boundary 216 (FIG. 2) of the cargo compartment 110 (FIG. 2), the composite layer 212, the metallic layer (or reinforcing grid) 214, the metallic layer 502, the composite layer 506 and/or the metallic layer 602 of the liner 700 are coupled to the aircraft supports 218 adjacent the boundary 216 via the fasteners 304.

The metallic layer (or reinforcing grid) 214 and the metallic layers 502, 602 of the illustrated example are coupled to the composite layers 212, 506 of the liner 700 to increase the structural rigidity of the composite layers 212, 506 when the liner 700 is exposed to fire for a prolonged periods of time and/or at substantially high temperatures. As a result, the liner 500 remains attached to the aircraft supports 218 and continues to provide flame-penetration resistance to the cargo compartment 110 when the liner 700 is exposed to fire and/or substantially high temperature.

While the example liner 700 is described with reference to FIG. 7, the order of the layers (e.g., the composite layers 212, the metallic layer (or reinforcing grid) 214, the metallic layer 502, the composite layer 506, the metallic layer 602) of the liner 600 may be changed and/or some of the layers described may be changed and/or eliminated. In some examples, the composite layers 212, the metallic layer (or reinforcing grid) 214, the metallic layer 502, the composite layer 506 and/or the metallic layer 602 is removed from the liner 700. In some examples, additional layers of metallic mesh, metallic cloth, metallic screen, metallic foil, composite material and/or other material (e.g., a honeycomb layer, a honeycomb sandwich layer, a foam layer) are included in the liner 700 that further increase the structural rigidity of the liner 600 and/or the flame-penetration resistance provided to the cargo compartment 110.

In the illustrated examples of FIGS. 5-7, the metallic layers (e.g., the metallic layers 502, 504 of FIG. 5, the metallic layers 602, 604 of FIG. 6, the metallic layers 502, 602 of FIG. 7) of the respective liners 500, 600, 700 provide flame-penetration resistance to further increase the flame-penetration resistance provided to the cargo compartment 110. The metallic layers 502, 504, 602, 604 increase the fire-penetration resistance provided by the liners 500, 600, 700 because the solid foil of the metallic layers 502, 504 and the mesh, cloth, or screen of the metallic layers 602, 604 are composed of metallic material having a substantially high melting point. For example, when the metallic layers 502, 504, 602, 604 are composed of steel, the metallic layers 502, 504, 602, 604 prevent and/or impede fire having a temperature at or below about 1600 degrees Kelvin (2500 degrees Fahrenheit) from penetrating the liner 500. When the metallic layers 502, 504, 602, 604 are composed of titanium, the metallic layers 502, 504, 602, 604 prevent and/or impede fire having a temperature at or below about 1900 degrees Kelvin (3000 degrees Fahrenheit) from penetrating the liner 500. As a result, the metallic layers 502, 504, 602, 604 of the example liners 500, 600, 700 substantially increase a period of time and/or a temperature at which the cargo compartment 110 is provided fire-penetration resistance.

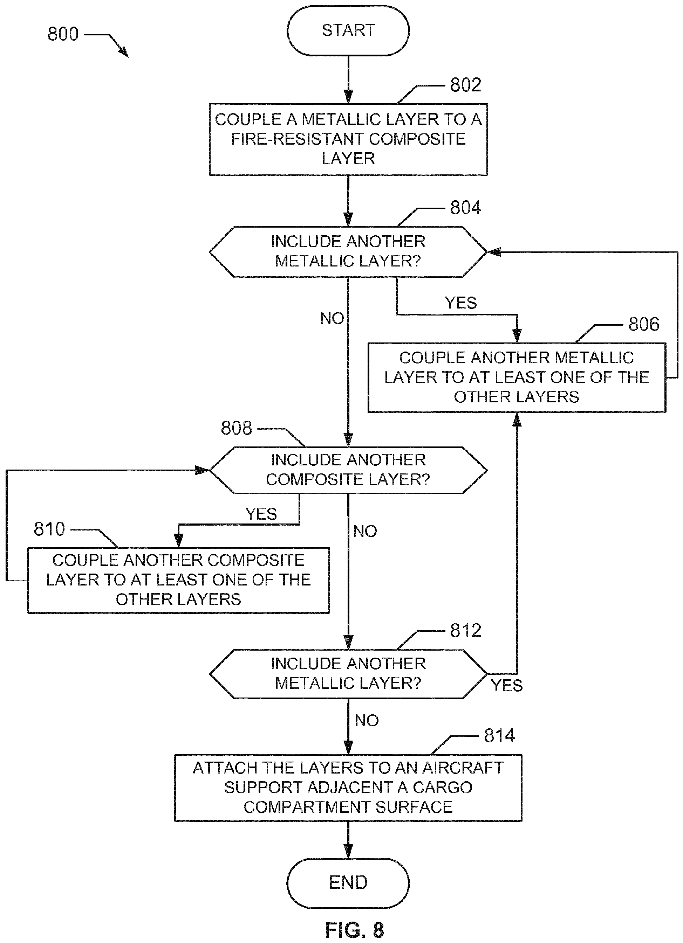

FIG. 8 is a flowchart representative of an example method 800 to provide flame-penetration resistance to an aircraft cargo compartment. Although the example method 800 is described with reference to the flowchart illustrated in FIG. 8, many other methods of providing flame-penetration resistance to an aircraft cargo compartment may alternatively be used. For example, the order of execution of the blocks may be changed, and/or some of the blocks described changed, eliminated, and/or combined.

The example method 800 for providing flame-penetration resistance to an aircraft cargo compartment is discussed in connection with the example aircraft cargo compartment 110 of FIG. 2 and the example liner 200 of FIGS. 2 and 3A-3B, the example liner 400 of FIGS. 4A-4B, the example liner 500 of FIG. 5, the example liner 600 of FIG. 6 and/or the example liner 700 of FIG. 7. Because the example method 800 may be used to assemble the example liner 200, the example liner 400, the example liner 500, the example liner 600 and/or the example liner 700 to provide flame-penetration resistance to the example aircraft cargo compartment 110, components identified in FIGS. 2-7 having functions substantially similar or identical to the functions of components described below will not be described in detail again. Instead, the same reference numbers will be used for like structures.

The example method 800 disclosed herein starts by coupling a metallic layer to a fire-resistant composite layer of a liner (block 802). The composite layer (e.g., the composite layer 212 of FIGS. 2-7, the composite layer 506 of FIGS. 5-7) of the liner (e.g., the liner 200 of FIGS. 2-3B, the liner 400 of FIGS. 4A-4B, the liner 500 of FIG. 5, the liner 600 of FIG. 6, the liner 700 of FIG. 7) provides flame-penetration resistance to a cargo compartment (e.g., the cargo compartment 110 of FIGS. 1 and 2) of an aircraft (e.g., the aircraft 100 of FIG. 1). The metallic layer is coupled to the composite layer to increase a structural rigidity of the composite layer. For example, the metallic layer is coupled to the fire-resistant composite layer via a co-curing and/or bonding process.

In some examples, the metallic layer is a metallic strap (e.g., the metallic straps 302 of FIGS. 3A, 3B, and 7), a metallic grid (e.g., the metallic layer (or reinforcing grid) 214 of FIGS. 2, 3A, 3B, and 7) formed of metallic straps and/or metallic plates or washers (e.g., the metallic plates 402 of FIGS. 4A and 4B). In some examples, the metallic layer is a metallic foil (e.g., the metallic layer 502 of FIGS. 5 and 7, the metallic layer 504 of FIG. 5), a metallic mesh (e.g., the metallic layer 602 of FIGS. 6-7, the metallic layer 604 of FIG. 6), a metallic cloth (e.g., the metallic layer 602 of FIGS. 6-7, the metallic layer 604 of FIG. 6) and/or a metallic screen (e.g., the metallic layer 602 of FIGS. 6-7, the metallic layer 604 of FIG. 6) that increases the flame-penetration resistance provided to surface of the aircraft cargo compartment.

After block 802, the example method 800 determines whether another metallic layer is to be included (block 804). If another metallic layer is to be included, the other metallic layer is coupled to at least one layer to increase the structural rigidity provided to the composite layer (block 806). For example, the other metallic layer may be coupled to the metallic layer of block 802 and/or the composite layer of block 802 via a co-curing and/or bonding process.

In some examples, the other metallic layer is a metallic strap (e.g., the metallic straps 302 of FIGS. 3A, 3B, and 7), a metallic grid (e.g., the metallic layer (or reinforcing grid) 214 of FIGS. 2, 3A, 3B, and 7) formed of metallic straps and/or metallic plates or washers (e.g., the metallic plates 402 of FIGS. 4A and 4B). In some examples, the other metallic layer is a metallic foil (e.g., the metallic layer 502 of FIGS. 5 and 7, the metallic layer 504 of FIG. 5), a metallic mesh (e.g., the metallic layer 602 of FIGS. 6-7, the metallic layer 604 of FIG. 6), a metallic cloth (e.g., the metallic layer 602 of FIGS. 6-7, the metallic layer 604 of FIG. 6) and/or a metallic screen (e.g., the metallic layer 602 of FIGS. 6-7, the metallic layer 604 of FIG. 6) that increases the flame-penetration resistance provided to the surface of the aircraft cargo compartment.

After the other metallic layer is coupled to at least one other layer, block 804 is repeated to determine if yet another metallic layer is to be included. If yet another metallic layer is to be included, blocks 806 and 804 are repeated. Upon determining that no other metallic layer is to be included, the example method 800 determines whether another composite layer is to be included (block 808).

If another composite layer is to be included, the composite layer is coupled to at least one layer (e.g., the metallic layer of block 802, the composite layer of block 802, a metallic layer of block 806) to increase the flame-penetration resistance provided to surface of the aircraft cargo compartment (block 810). For example, the other composite layer (e.g., the composite layer 212 of FIGS. 2-7, the composite layer 506 of FIGS. 5-7) is coupled to at least one layer of the liner via a co-curing and/or bonding process.

After the other composite layer is coupled to at least one layer, block 808 is repeated to determine if yet another composite layer is to be included. If another composite layer is to be included, blocks 810 and 808 are repeated. For example, another composite layer may be coupled to the metallic layer of block 802, the composite layer of block 802, a metallic layer of block 806 and/or another composite layer of block 810.

If no other composite layer is to be included, the example method 800 determines whether another metallic layer is to be included (block 812). If another metallic layer is to be included, the example method 800 returns to block 806 to couple another metallic layer to at least one layer to further increase the structural rigidity of the composite layer(s) and/or to further increase the flame-penetration resistance provided to the surface of the aircraft cargo compartment. For example, the other metallic layer may be coupled to the metallic layer of block 802, the composite layer of block 802, a metallic layer of block 806 and/or a composite layer of block 810. After the other metallic layer is coupled at block 806, blocks 804, 806, 808, 812 are repeated until the example method 800 determines no other metallic layers or composite layers are to be included.

If no other metallic layer is to be included, the example method 800 attaches the coupled metallic and composite layers to the surface of the aircraft cargo compartment or to an aircraft support (e.g., the aircraft support 218 of FIGS. 2, 3A, 4A, and 7) adjacent the surface of the aircraft cargo compartment to provide flame-penetration resistance to the surface (block 814). In some examples, the coupled metallic and composite layers are attached to the surface and/or the aircraft support via fasteners (e.g., the fasteners 304 of FIGS. 3A-4B and 7). For example, the metallic and composite layers are attached to the aircraft support via a bolt (e.g., the bolt 306 of FIG. 3A) that extends through the metallic layers, the composite layers, and the aircraft support and is received (e.g., threadably received) by a nut (e.g., the nut 308 of FIG. 3A).

## Claims

1. An apparatus comprising:
a liner (200) having a fire-resistant composite layer (212) to provide flame-penetration resistance to a compartment; and
a first metallic layer (214) composed of a metallic material having a melting point equal to or greater than about 1400 degrees Kelvin (2000 degrees Fahrenheit) and comprising metallic straps that form a grid-like structure coupled to the composite layer (212) such that a structural rigidity of the apparatus is greater than that of the composite layer alone and such that the flame-penetration resistance provided by the apparatus is greater than that provided by the composite layer alone.

2. The apparatus of claim 1, further comprising fasteners (304) to attach the first metallic layer (214) and the composite layer (212) to an aircraft support (218).

3. The apparatus of claim 2, wherein the first metallic layer comprises a metallic plate or a metallic washer (402) adjacent at least one of the fasteners such that the structural rigidity of the apparatus adjacent the at least one fastener (304) is greater than that of the composite layer alone and such that the flame-penetration resistance provided by the apparatus is greater than that provided by the composite layer alone.

4. The apparatus of any one of claims 1-3, further comprising a second metallic layer different than the first metallic layer (502, 504, 602, 604) to such that the structural rigidity of the apparatus is greater than that of the composite layer alone and such that the flame-penetration resistance provided by the apparatus is greater than that provided by the composite layer alone, the second metallic layer (502, 504, 602, 604) being composed of a metallic material having a melting point equal to or greater than about 1400 degrees Kelvin (2000 degrees Fahrenheit).

5. The apparatus of any of claims 1 to 4, wherein the first metallic layer (214) is coupled to the composite layer (212) via bonding or co-curing.

6. A method comprising:
coupling a first metallic layer (214) to a fire-resistant composite layer (212) to form an apparatus, the first metallic layer comprising metallic straps that form a grid-like structure and composed of a metallic material having a melting point equal to or greater than about 1400 degrees Kelvin (2000 degrees Fahrenheit); and
attaching the fire-resistant composite layer and the first metallic layer to a support (218), the fire-resistant composite layer to provide flame-penetration resistance to a compartment, the first metallic layer such that a structural rigidity of the apparatus is greater than that of the composite layer alone and such that the flame-penetration resistance provided by the apparatus is greater than that provided by the composite layer alone.

7. The method of claim 6, wherein attaching the fire-resistant composite layer (212) and the first metallic layer (214) to the support (218) comprises attaching the fire-resistant composite layer to the support via fasteners (304).

8. The method of any one of claims 6 or 7, further comprising coupling a second metallic layer (502, 504, 602, 604) to the fire-resistant composite layer opposite the first metallic layer (214) such that the structural rigidity of the apparatus when the apparatus is exposed to fire is greater than that of the composite layer alone.

## Patentansprüche

1. Vorrichtung, umfassend:
eine Auskleidung (200), die eine feuerbeständige Verbundstoffschicht (212) aufweist, um einem Abteil Widerstandsfähigkeit gegen Flammenübergriff zu verleihen; und
eine erste Metallschicht (214), die aus einem Metallmaterial gebildet ist, das einen Schmelzpunkt von gleich oder höher als etwa 1400 Grad Kelvin (2000 Grad Fahrenheit) aufweist, und Metallbänder umfasst, die eine gitterartige Struktur ausbilden, die mit der Verbundstoffschicht (212) gekoppelt ist, derart dass eine strukturelle Festigkeit der Vorrichtung größer ist als diejenige der Verbundstoffschicht allein und derart dass die Widerstandsfähigkeit gegen Flammenübergriff, die durch die Vorrichtung verliehen wird, größer ist als diejenige, die durch die Verbundstoffschicht allein verliehen wird.

2. Vorrichtung nach Anspruch 1, die ferner Befestigungselemente (304) umfasst, um die erste Metallschicht (214) und die Verbundstoffschicht (212) an einem Träger (218) eines Luftfahrzeugs anzubringen.

3. Vorrichtung nach Anspruch 2, wobei die erste Metallschicht wenigstens einem der Befestigungselemente benachbart eine Metallplatte oder eine metallene Unterlegscheibe (402) umfasst, derart dass die strukturelle Festigkeit der Vorrichtung dem wenigstens einen Befestigungselement (304) benachbart größer ist als diejenige der Verbundstoffschicht allein und derart dass die Widerstandsfähigkeit gegen Flammenübergriff, die durch die Vorrichtung verliehen wird, größer ist als diejenige, die durch die Verbundstoffschicht allein verliehen wird.

4. Vorrichtung nach einem der Ansprüche 1-3, die ferner eine zweite Metallschicht umfasst, die von der ersten Metallschicht (502, 504, 602, 604) verschieden ist, derart dass die strukturelle Festigkeit der Vorrichtung größer ist als diejenige der Verbundstoffschicht allein und derart dass die Widerstandsfähigkeit gegen Flammenübergriff, die durch die Vorrichtung verliehen wird, größer ist als diejenige, die durch die Verbundstoffschicht allein verliehen wird, wobei die zweite Metallschicht (502, 504, 602, 604) aus einem Metallmaterial gebildet ist, das einen Schmelzpunkt von gleich oder höher als etwa 1400 Grad Kelvin (2000 Grad Fahrenheit) aufweist.

5. Vorrichtung nach einem der Ansprüche 1 bis 4, wobei die erste Metallschicht (214) mit der Verbundstoffschicht (212) über Verkleben oder gemeinsames Aushärten verbunden ist.

6. Verfahren, umfassend:
Koppeln einer ersten Metallschicht (214) mit einer feuerbeständigen Verbundstoffschicht (212), um eine Vorrichtung auszubilden, wobei die erste Metallschicht Metallbänder umfasst, die eine gitterartige Struktur ausbilden, und aus einem Metallmaterial gebildet ist, das einen Schmelzpunkt von gleich oder höher als etwa 1400 Grad Kelvin (2000 Grad Fahrenheit) aufweist; und
Anbringen der feuerbeständigen Verbundstoffschicht und der ersten Metallschicht an einem Träger (218), wobei die feuerbeständige Verbundstoffschicht einem Abteil Widerstandsfähigkeit gegen Flammenübergriff verleihen soll und die erste Metallschicht derart ist, dass eine strukturelle Festigkeit der Vorrichtung größer ist als diejenige der Verbundstoffschicht allein und derart dass die Widerstandsfähigkeit gegen Flammenübergriff, die durch die Vorrichtung verliehen wird, größer ist als diejenige, die durch die Verbundstoffschicht allein verliehen wird.

7. Verfahren nach Anspruch 6, wobei das Anbringen der feuerbeständigen Verbundstoffschicht (212) und der ersten Metallschicht (214) an dem Träger (218) das Anbringen der feuerbeständigen Verbundstoffschicht an dem Träger über Befestigungselemente (304) umfasst.

8. Verfahren nach einem der Ansprüche 6 oder 7, das ferner das Koppeln einer zweiten Metallschicht (502, 504, 602, 604) mit der feuerbeständigen Verbundstoffschicht gegenüber der ersten Metallschicht (214) umfasst, derart dass die strukturelle Festigkeit der Vorrichtung, wenn die Vorrichtung Feuer ausgesetzt ist, größer ist als diejenige der Verbundstoffschicht allein.

## Revendications

1. Dispositif comprenant :
une doublure (200) comportant une couche composite ignifuge (212) pour apporter une résistance à la pénétration des flammes à un compartiment ; et
une première couche métallique (214) composée d'un matériau métallique ayant un point de fusion égal ou supérieur à environ 1400 kelvins (2000 degrés Fahrenheit) et comprenant des bandes métalliques qui forment une structure en forme de grille couplée à la couche composite (212) de telle sorte qu'une rigidité structurale du dispositif est supérieure à celle de la couche composite seule et de telle sorte que la résistance à la pénétration des flammes apportée par le dispositif est supérieure à celle apportée par la couche composite seule.

2. Dispositif de la revendication 1, comprenant en outre des attaches (304) pour fixer la première couche métallique (214) et la couche composite (212) à un support d'aéronef (218).

3. Dispositif de la revendication 2, dans lequel la première couche métallique comprend une plaque métallique ou une rondelle métallique (402) au voisinage d'au moins une des attaches de telle sorte que la rigidité structurale du dispositif au voisinage de l'au moins une attache (304) est supérieure à celle de la couche composite seule et de telle sorte que la résistance à la pénétration des flammes apportée par le dispositif est supérieure à celle apportée par la couche composite seule.

4. Dispositif de l'une quelconque des revendications 1 à 3, comprenant en outre une deuxième couche métallique différente de la première couche métallique (502, 504, 602, 604) de telle sorte que la rigidité structurale du dispositif est supérieure à celle de la couche composite seule et de telle sorte que la résistance à la pénétration des flammes apportée par le dispositif est supérieure à celle apportée par la couche composite seule, la deuxième couche métallique (502, 504, 602, 604) étant composée d'un matériau métallique ayant un point de fusion égal ou supérieur à environ 1400 kelvins (2000 degrés Fahrenheit).

5. Dispositif de l'une quelconque des revendications 1 à 4, dans lequel la première couche métallique (214) est couplée à la couche composite (212) par collage ou codurcissement.

6. Procédé comprenant :
le couplage d'une première couche métallique (214) à une couche composite ignifuge (212) pour former un dispositif, la première couche métallique comprenant des bandes métalliques formant une structure en forme de grille et composées d'un matériau métallique ayant un point de fusion égal ou supérieur à environ 1400 kelvins (2000 degrés Fahrenheit) ; et
la fixation de la couche composite ignifuge et de la première couche métallique à un support (218), la couche composite ignifuge devant apporter une résistance à la pénétration des flammes à un compartiment, la première couche métallique étant telle qu'une rigidité structurale du dispositif est supérieure à celle de la couche composite seule et telle que la résistance à la pénétration des flammes apportée par le dispositif est supérieure à celle apportée par la couche composite seule.

7. Procédé de la revendication 6, dans lequel la fixation de la couche composite ignifuge (212) et de la première couche métallique (214) au support (218) comprend la fixation de la couche composite ignifuge au support par le biais d'attaches (304).

8. Procédé de l'une quelconque des revendications 6 et 7, comprenant en outre le couplage d'une deuxième couche métallique (502, 504, 602, 604) à la couche composite ignifuge à l'opposé de la première couche métallique (214), de sorte que la rigidité structurale du dispositif lorsque le dispositif est exposé au feu est supérieure à celle de la couche composite seule.
